# EUROPEAN PATENT APPLICATION

(11) **EP 3 075 985 A1**
(43) Date of publication of application: **05.10.2016**
(21) Application number: 16162095.0
(22) Date of filing: 23.03.2016
(51) Int. Cl.: F02C 7/143, F01D 11/24

(54) **HEAT PIPE COOLED TURBINE CASING SYSTEM FOR CLEARANCE MANAGEMENT**

(30) Priority: 02.04.2015 US 201514676917
(71) Applicant: General Electric Company, Schenectady, NY 12345 (US)
(72) Inventor: EKANAYAKE, Sanji, Atlanta, GA Georgia 30339 (US); SCIPIO, Alston Ilford, Atlanta, GA Georgia 30339 (US); YANG, Timothy Tahteh, Greenville, SC South Carolina 29615 (US)
(74) Representative: Lee, Brenda

(57) **Abstract**

A turbomachine 100 includes a compressor 110 configured to compress air received at an intake portion to form a compressed airflow that exits into an outlet portion. A combustor 120 is operably connected with the compressor, and the combustor receives the compressed airflow. A turbine 130 is operably connected with the combustor, and the turbine receives combustion gas flow from the combustor. The turbine has a turbine casing. A cooling system 250 is operatively connected to the turbine casing. The cooling system 250 includes a plurality of heat pipes 252 attached to and in thermal communication with the turbine casing. The plurality of heat pipes are operatively connected to one or more manifolds 254. The plurality of heat pipes 252 and the one or more manifolds 254 are configured to transfer heat from the turbine casing to a plurality of heat exchangers.

## Description

Exemplary embodiments of the present invention relate to the art of turbomachines and, more particularly, to a heat pipe cooling system for clearance management in a turbine.

Turbomachines include a compressor operatively connected to a turbine that, in turn, drives another machine such as, a generator. The compressor compresses an incoming airflow that is delivered to a combustor to mix with fuel and be ignited to form high temperature, high pressure combustion products. The high temperature, high pressure combustion products are employed to drive the turbine.

Simple and combined cycle gas turbine systems are designed to use a variety of fuels ranging from gas to liquid, at a wide range of temperatures. In some instances, the fuel might be at a relatively low temperature when compared to the compressor discharge air temperature. Utilizing low temperature fuel impacts emissions, performance, and efficiency of the gas turbine system. To improve these characteristics, it is desirable to increase the fuel temperature before combusting the fuel.

By increasing the temperature of the fuel before it is burned, the overall thermal performance of the gas turbine system may be enhanced. Fuel heating generally improves gas turbine system efficiency by reducing the amount of fuel required to achieve the desired firing temperature. One approach to heating the fuel is to use electric heaters or heat derived from a combined cycle process to increase the fuel temperature. However, existing combined cycle fuel heating systems often use steam flow that could otherwise be directed to a steam turbine to increase combined cycle output.

Gas turbine buckets have a running clearance to the shroud blocks. This clearance is a leak path to the hot gases and is a source of inefficiency, however there is a practical limit to the minimum clearance due to component differential expansion as well as start-up and shut-down transients in physical position. As such, there is a need for active management of this running clearance. A number of methods are known in the art for active clearance control including fan-driven and compressor bleed driven air cooling of localized areas of the turbine shell. Additionally, prior art teaches water cooled casings, however negative attributes of water or glycol cooling includes the substantial challenge of accommodating activating the system with a hot casing due to boiling given the high casing surface temperatures.

In an aspect of the present invention, a turbomachine includes a compressor configured to compress air received at an intake portion to form a compressed airflow that exits into an outlet portion. A combustor is operably connected with the compressor, and the combustor receives the compressed airflow. A turbine is operably connected with the combustor, and the turbine receives combustion gas flow from the combustor. The turbine has a turbine casing. A cooling system is operatively connected to the turbine casing. The cooling system includes a plurality of heat pipes attached to and in thermal communication with the turbine casing. The plurality of heat pipes are operatively connected to one or more manifolds. The plurality of heat pipes and the one or more manifolds are configured to transfer heat from the turbine casing to a plurality of heat exchangers.

In another aspect of the present invention, a cooling system for a turbomachine is provided. The turbomachine includes a compressor, and a combustor operably connected with the compressor. A turbine is operably connected with the combustor, and the turbine has a turbine casing. The cooling system is operatively connected to the turbine casing. The cooling system includes a plurality of heat pipes attached to and in thermal communication with the turbine casing. The plurality of heat pipes is operatively connected to one or more manifolds. The plurality of heat pipes and the one or more manifolds are configured to transfer heat from the turbine casing to a plurality of heat exchangers.

In yet another aspect of the present invention, a method of extracting heat from a turbine casing of a turbomachine includes the step of passing combustion gases through a turbine. The turbine casing forms an outer shell of the turbine. An extracting step extracts heat from the turbine casing by thermally conducting the heat to a plurality of heat pipes. The plurality of heat pipes have a molten salt heat transfer medium including one or combinations of, potassium or sodium. A conducting step conducts heat from the plurality of heat pipes to a heat pipe heat exchanger, and the heat pipe heat exchanger is configured to transfer heat to a fuel heating heat exchanger. The heat pipe heat exchanger may be operably connected to a circuit including a heat recovery steam generator heat exchanger.

In the drawings:
FIG. 1 is a simplified schematic diagram of a turbomachine.
FIG. 2 is a partially schematic, axial sectional view through a portion of the turbomachine, according to an aspect of the present invention.
FIG. 3 illustrates a cross-sectional and schematic view of the cooling system, according to an aspect of the present invention.
FIG. 4 illustrates a partially schematic and radial cross-sectional view of the cooling system, according to an aspect of the present invention.
FIG. 5 illustrates a cross sectional shape of a circular or cylindrical heat pipe, according to an aspect of the present invention.
FIG. 6 illustrates a cross sectional shape of an oval heat pipe, according to an aspect of the present invention.
FIG. 7 illustrates a cross sectional shape of a polygonal heat pipe, according to an aspect of the present invention.
FIG. 8 illustrates a cross sectional shape of a rectangular with rounds corners heat pipe, according to an aspect of the present invention.
FIG. 9 illustrates a cross sectional shape of a circular or cylindrical heat pipe with a plurality of fins, according to an aspect of the present invention.
FIG. 10 illustrates a schematic view of a turbomachine incorporating the cooling system, according to an aspect of the present invention.
FIG. 11 illustrates a cross-sectional and schematic view of the cooling system, according to an aspect of the present invention.
FIG. 12 illustrates a method for extracting heat from a compressed airflow generated by a turbomachine, according to an aspect of the present invention.

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," and "the" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

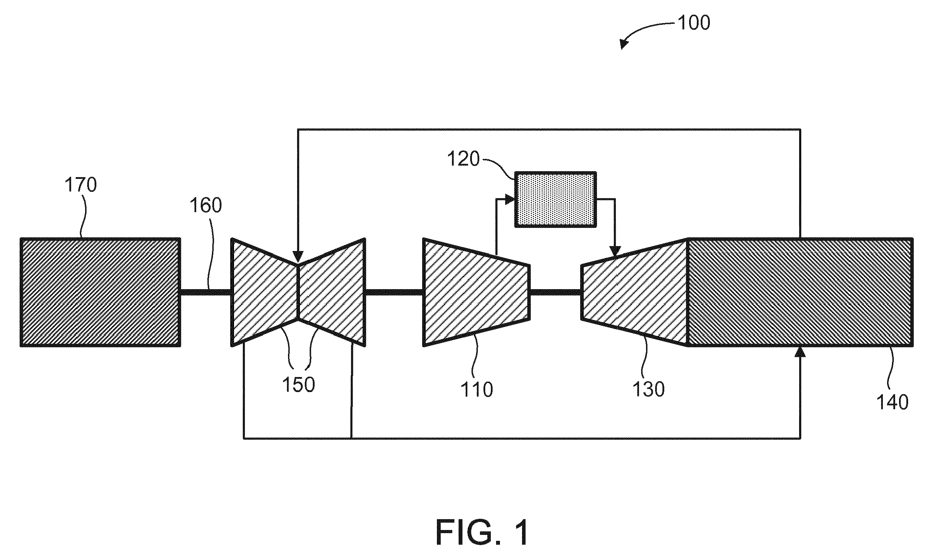

FIG. 1 illustrates a simplified diagram of a turbomachine 100. The turbomachine includes a compressor 110 operably connected to a combustor 120, and the combustor 120 is operably connected to a turbine 130. The turbine's exhaust may be operably connected to a heat recovery steam generator (HRSG) 140. The HRSG 140 generates steam that is directed into a steam turbine 150. In this example, all the turbomachines are arranged in a single shaft configuration, and the shaft 160 drives a generator 170. It is to be understood that the term turbomachine includes compressors, turbines or combinations thereof.

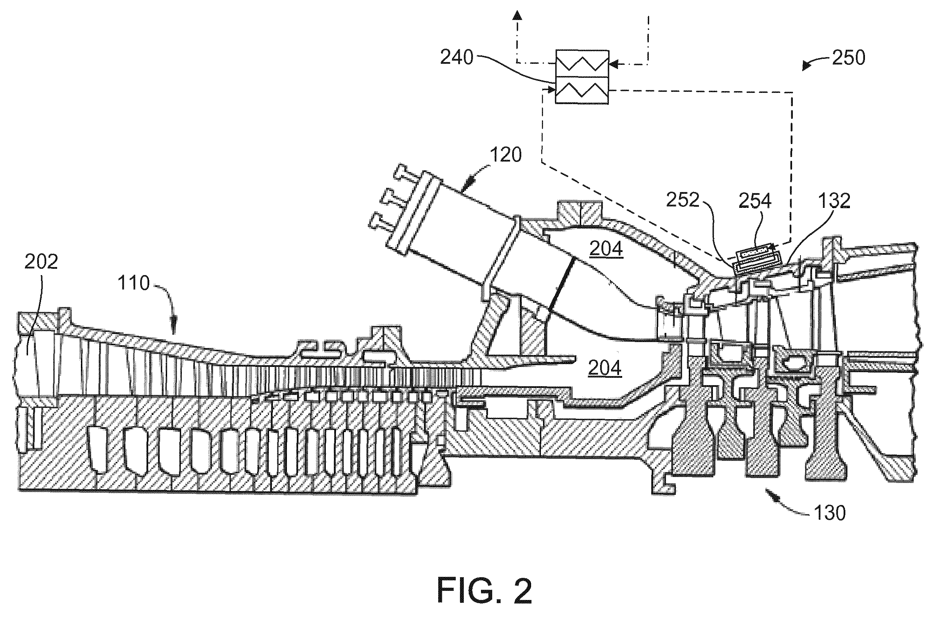

FIG. 2 is a partially schematic, axial sectional view through a portion of the turbomachine, according to an aspect of the present invention. The turbomachine 100 includes a compressor 110 having an intake portion 202 and an outlet portion 204. The compressor compresses air received at the intake portion 202 and forms a compressed airflow that exits from/into the outlet portion 204. The combustor 120 is operably connected with the compressor 110, and the combustor 120 receives the compressed airflow. The turbine 130 is operably connected with the combustor 120, and the turbine 130 receives combustion gas flow from the combustor 120. The turbine 130 includes a turbine casing 132. The turbine casing forms an outer shell of the turbine 130.

A cooling system 250 is operatively connected to the turbine casing 132. For example, a plurality of heat pipes 252 are attached to the turbine casing and the heat pipes are also in thermal communication with the turbine casing. The heat pipes 252 may be circumferentially located around the turbine casing and attached thereto by welds, fasteners, bolts, welded brackets, clamps or any other suitable attachment mechanism. The heat pipes 252 are operatively connected to one or more manifolds 254, and the heat pipes 252 and manifolds 254 are configured to transfer heat from the turbine casing 132 to a plurality of heat exchangers 240.

The heat pipes 252 absorb heat from the turbine casing 132. As the turbine 130 operates, hot combustion gases flow through the various turbine stages (three are shown). Some of the heat is transferred to the turbine casing, and this heat may be harvested by the heat pipes 252. In one example, the heat pipes are welded to the turbine casing, and the heat pipes are configured to maintain close contact with the exterior surface of the turbine casing (to improve heat transfer). In other embodiments, the heat pipes 252 may be contoured to follow the shape of the turbine casing, or the heat pipes may be embedded into the turbine casing.

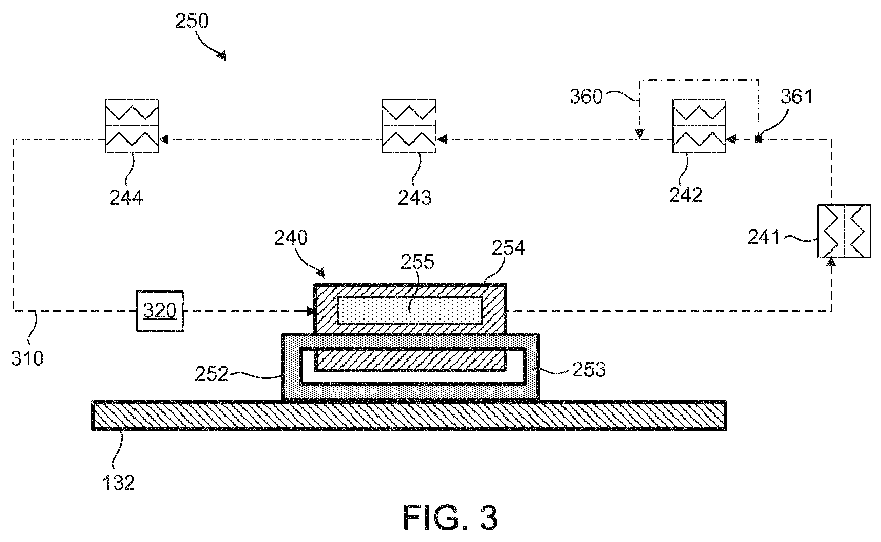

FIG. 3 illustrates a cross-sectional and schematic view of the cooling system 250, according to an aspect of the present invention. The heat pipe 252 is attached to the turbine casing 132. The heat pipe 252 includes a heat transfer medium 253, such as a liquid metal or molten salt. The manifold 254 includes a coolant/heat transfer medium 255, such as water, steam, glycol or oil. The manifold 254 is thermally connected to a heat pipe heat exchanger 240. A conduit 310 connects the heat pipe heat exchanger 240 to a plurality of other heat exchangers. For example, the other heat exchangers may be a fuel heating heat exchanger 241, a fuel pre-heating heat exchanger 242, a HRSG heat exchanger 243 and any other desired heat exchanger 244. The heat pipe heat exchanger 240 transfers the heat from the manifolds 254 to the heat transfer medium in conduit 310. As examples only, the conduit's heat transfer medium maybe water, glycol, oil or any other suitable fluid. A pump 320 may be used to force the fluid through the conduit 310 and the heat exchangers. The heat exchangers may also include valve controlled bypass lines 360 (only one is shown for clarity). A valve 361 can be operated so that it directs flow around the heat exchanger (e.g., 242) via bypass line/conduit 360. This feature may be desirable if specific heat exchangers are to be "removed" (possibly temporarily) from the flow along conduit 310. The valves 361 can be manually controlled or remotely controlled.

The manifold 254 is connected to multiple heat pipes 252, and the heat pipes 252 may be arranged circumferentially about the turbine casing/shell 132. The heat pipes 252 include a heat transfer medium 253 which may be a liquid metal, molten salt or Qu material. As examples only, the heat transfer medium may be one or combinations of, aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy. As one specific example, the heat transfer medium 253 may be a molten salt comprising potassium and/or sodium. The outer portion of the heat pipes may be made of any suitable material capable of serving the multiple purposes of high thermal conductivity, high strength and high resistance to corrosion from the heat transfer medium.

The heat pipes 252 may also be formed of a "Qu-material" having a very high thermal conductivity. The Qu-material may be in the form of a multi-layer coating provided on the interior surfaces of the heat pipes. For example, a solid state heat transfer medium may be applied to the inner walls in three basic layers. The first two layers are prepared from solutions which are exposed to the inner wall of the heat pipe. Initially the first layer which primarily comprises, in ionic form, various combinations of sodium, beryllium, a metal such as manganese or aluminum, calcium, boron, and a dichromate radical, is absorbed into the inner wall to a depth of 0.008 mm to 0.012 mm. Subsequently, the second layer which primarily comprises, in ionic form, various combinations of cobalt, manganese, beryllium, strontium, rhodium, copper, B-titanium, potassium, boron, calcium, a metal such as aluminum and the dichromate radical, builds on top of the first layer and forms a film having a thickness of 0.008 mm to 0.012 mm over the inner wall of the heat pipe. Finally, the third layer is a powder comprising various combinations of rhodium oxide, potassium dichromate, radium oxide, sodium dichromate, silver dichromate, monocrystalline silicon, beryllium oxide, strontium chromate, boron oxide, B-titanium and a metal dichromate, such as manganese dichromate or aluminum dichromate, which evenly distributes itself across the inner wall. The three layers are applied to the heat pipe and are then heat polarized to form a superconducting heat pipe that transfers thermal energy with little or no net heat loss.

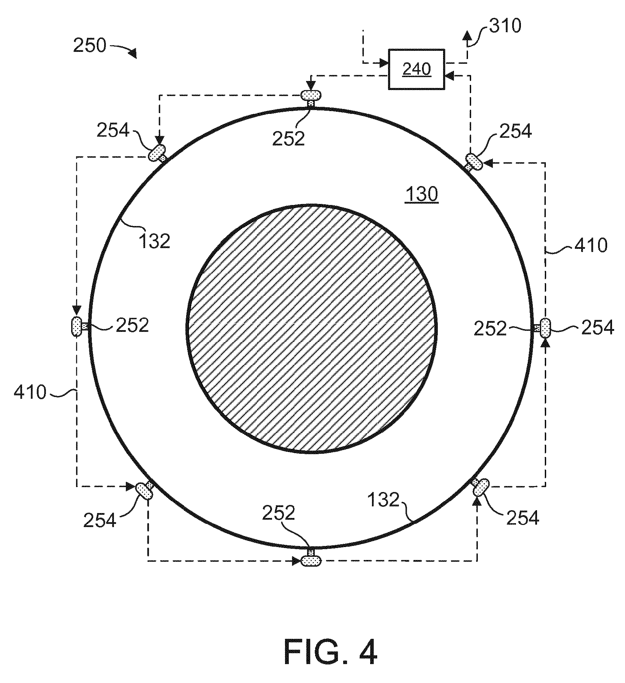

FIG. 4 illustrates a partially schematic and radial cross-sectional view of the cooling system 250, according to an aspect of the present invention. The heat pipes 252 are circumferentially located and distributed around the turbine casing 132. The manifold 254 is connected in a circuit represented by line 410. For example, the manifold 254 would form a generally continuous flow loop around the turbine 130. A portion of this flow loop is interrupted and routed to the heat pipe heat exchanger 240, and the outlet therefrom is routed back the manifold 254. In this way, heat generated by the turbine casing 132 (via heat pipes 252) can be transferred to the heat exchanger 240.

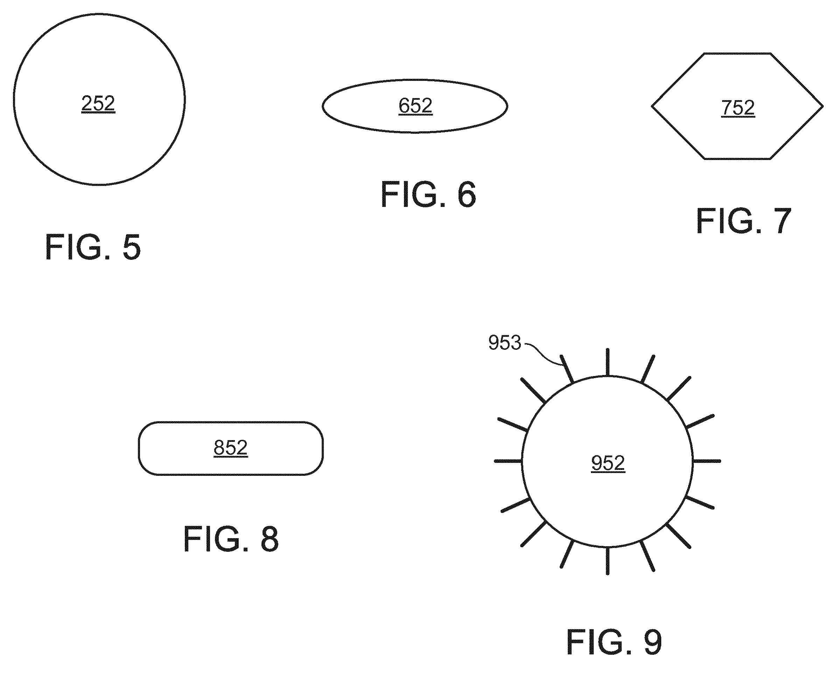

FIG. 5 illustrates a cross sectional shape of a circular or cylindrical heat pipe 252, according to an aspect of the present invention. A cylindrical heat pipe is easy to manufacture and install with conventional tools. FIG. 6 illustrates a cross sectional shape of an oval heat pipe 652, according to an aspect of the present invention. The oval heat pipe 652 may have improved heat transfer characteristics than the cylindrical heat pipe. FIG. 7 illustrates a cross sectional shape of a polygonal heat pipe 752, according to an aspect of the present invention. The polygonal shape may include rectangular, hexagonal, square or any other suitable polygonal shape. FIG. 8 illustrates a cross sectional shape of a rectangular with rounded corners heat pipe 852. The rectangular with rounded corners shape may have improved heat transfer characteristics over the oval heat pipe 652, due to increased surface area contact with the turbine casing. FIG. 9 illustrates a cross sectional shape of a circular or cylindrical heat pipe 952 with a plurality of fins 953, according to an aspect of the present invention. The fins 953 are configured to increase the heat transfer capability of the heat pipe, may be arranged axially as shown or radially, and may be comprised of a material having high thermal conductivity, such as copper or aluminum.

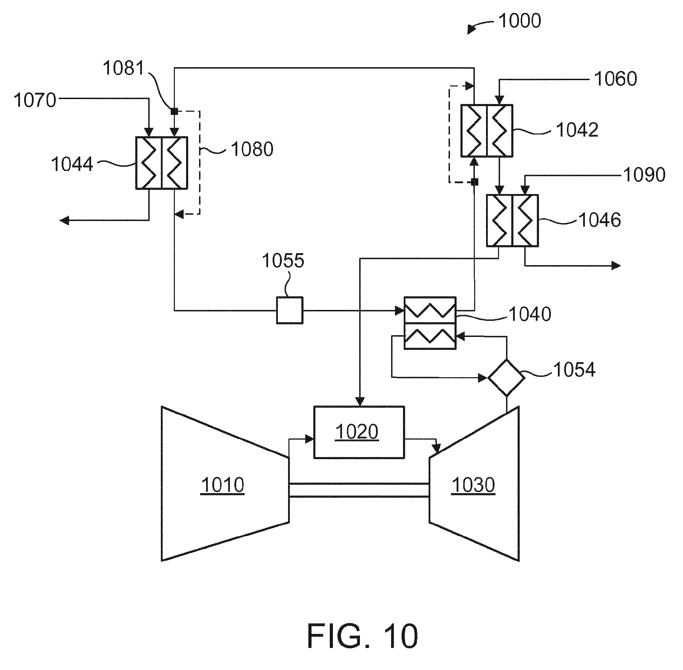

FIG. 10 illustrates a schematic view of a turbo machine 1000 incorporating the cooling system, according to an aspect of the present invention. The turbomachine 1000 includes a compressor 1010, combustor 1020 and turbine 1030. The cooling system includes a plurality of heat pipes (not shown for clarity) connected to a manifold 1054. The manifold 1054 is connected to a heat pipe heat exchanger 1040. A pump 1055 circulates a coolant through a conduit system and a plurality of heat exchangers. The heat pipe heat exchanger 1040 is connected to a fuel gas pre-heater heat exchanger 1042. Fuel gas 1060 is input and travels to the combustor 1020. The fuel gas pre-heater heat exchanger is connected to a heat recovery steam generator (HSRG) heat exchanger 1044. Water 1070 is input to the heat exchanger 1044 and heated to an elevated temperature or steam, and is output to the HRSG economizer (not shown). Each heat exchanger may include a bypass line 1080 and valve 1081 to selectively bypass the respective heat exchanger. Only one such bypass line is identified in FIG. 10 for clarity. A primary fuel heater heat exchanger 1046 may be fed by steam 1090 from the HSRG (not shown), and the resultant heated fuel is delivered to combustor 1020.

The valves 1081 and bypass lines 1080 (if connected on all heat exchangers) allow for improved control over fuel heating and machine efficiency. For example, heat exchangers 1040 and 1044 may be connected in a loop to only heat the water input to the HRSG. Heat exchangers 1040 and 1042 may be connected in a loop to pre-heat the fuel supply. This configuration may greatly reduce or eliminate the steam withdrawn from the HRSG, and will permit more steam to be directed into a steam turbine (not shown). As another example, heat exchangers 1040, 1042 and 1044 could be connected in a loop. This configuration will pre-heat fuel 1060 and heat water 1070 going into the HRSG. Heat exchangers 1040, 1042 and 1046 may be connected in a loop and this will maximize the fuel heating potential. Alternatively, all heat exchangers may be connected in a loop so that all heat exchangers will benefit from the heat removed from the compressor discharge airflow.

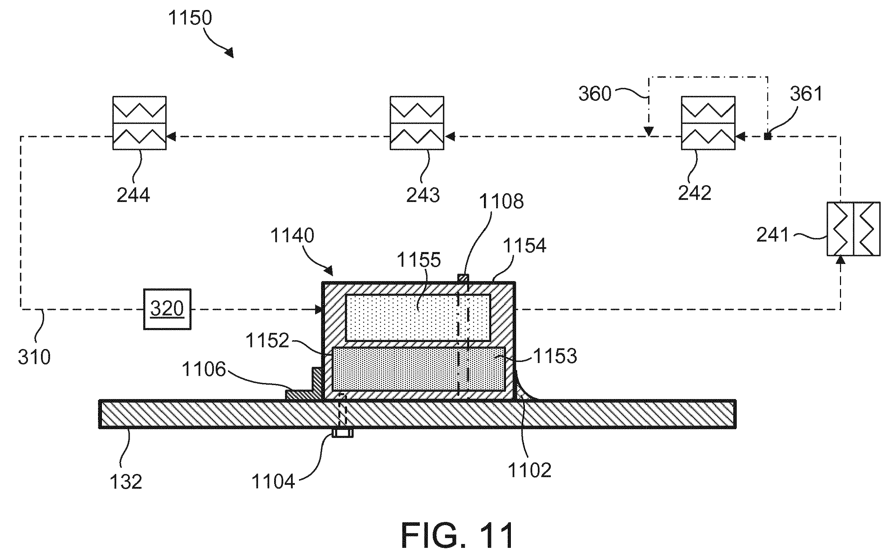

FIG. 11 illustrates a cross-sectional and schematic view of the cooling system 1150, according to an aspect of the present invention. The heat pipe 1152 is attached to the turbine casing 132 via manifold 1154. The heat pipe 1152 includes a heat transfer medium 1153, such as a liquid metal or molten salt. The manifold 1154 includes a coolant/heat transfer medium 1155, such as water, steam, glycol or oil. The manifold 1154 and/or heat pipes 1152 may be attached to the turbine casing 132 by welds 1102, bolts or fasteners 1104, welded brackets 1106 or clamps 1108. The manifold 1154 is thermally connected to a heat pipe heat exchanger 1140. A conduit 310 connects the heat pipe heat exchanger 1140 to a plurality of other heat exchangers. For example, the other heat exchangers may be a fuel heating heat exchanger 241, a fuel pre-heating heat exchanger 242, a HRSG heat exchanger 243 and any other desired heat exchanger 244. The heat pipe heat exchanger 1140 transfers the heat from the manifolds 1154 to the heat transfer medium in conduit 310. As examples only, the conduit's heat transfer medium may be water, glycol, oil or any other suitable fluid. A pump 320 may be used to force the fluid through the conduit 310 and the heat exchangers. The heat exchangers may also include valve controlled bypass lines 360 (only one is shown for clarity). A valve 361 can be operated so that it directs flow around the heat exchanger (e.g., 242) via bypass line/conduit 360.

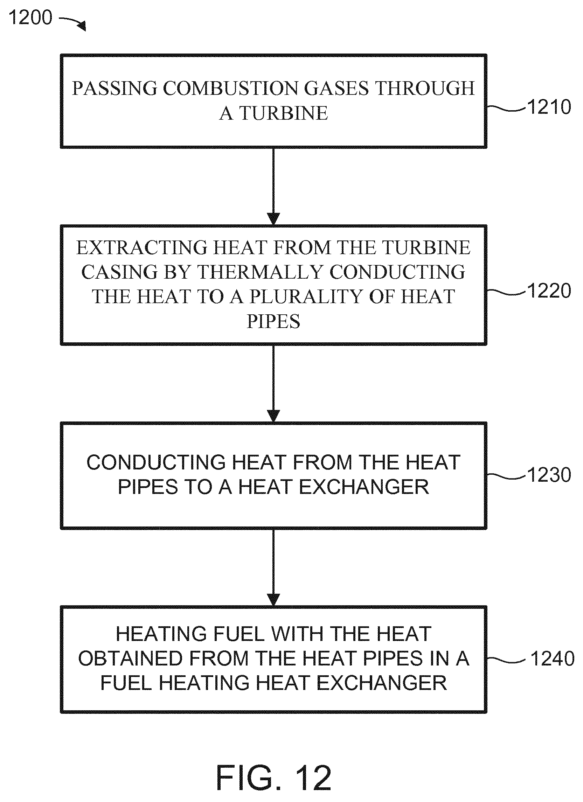

FIG. 12 illustrates a method 1200 for extracting heat from a turbomachine. The method includes a step 1210 of passing combustion gases through a turbine 130. An extracting step 1220 extracts heat from the turbine casing 132 with a plurality of heat pipes 252. The heat pipes 252 may include a molten salt heat transfer medium, such as, potassium or sodium, or a liquid metal or combinations thereof. The heat pipes 252 are in thermal communication with and may be attached to the turbine casing. A conducting step 1230 conducts heat from the heat pipes 252 to a heat pipe heat exchanger 240. The heat pipe heat exchanger 240 is configured to transfer heat to a fuel heating heat exchanger 1042. A heating step 1240 heats the fuel 1060 with the heat obtained from the heat pipes in the fuel heating heat exchanger 1042. In addition, the heat pipe heat exchanger 1040 may be operably connected to a circuit including a heat recovery steam generator (HRSG) heat exchanger 1044.

The cooling and fuel heating system of the present invention provides a number of advantages. Turbomachine efficiency may be improved and a reduced steam demand for fuel heating results in improved combined cycle heat rate. The turbine section buckets, wheels and combustion gas transition pieces may have improved lifespans due to the cooler turbine discharge airflow.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A turbomachine comprising:
   a compressor configured to compress air received at an intake portion to form a compressed airflow that exits into an outlet portion;
   a combustor operably connected with the compressor, the combustor receiving the compressed airflow;
   a turbine operably connected with the combustor, the turbine receiving combustion gas flow from the combustor, the turbine having a turbine casing;
   a cooling system operatively connected to the turbine casing, the cooling system including a plurality of heat pipes attached to and in thermal communication with the turbine casing, the plurality of heat pipes operatively connected to one or more manifolds, the plurality of heat pipes and the one or more manifolds are configured to transfer heat from the turbine casing to a plurality of heat exchangers.
2. The turbomachine of clause 1, the plurality of heat pipes further comprising a heat transfer medium including one or combinations of:
   aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
3. The turbomachine of any preceding clause, the plurality of heat pipes further comprising a molten salt heat transfer medium including one or combinations of, potassium or sodium.
4. The turbomachine of any preceding clause, the plurality of heat pipes attached to the turbine casing via one or more of:
   welds, bolts, fasteners, welded brackets or clamps.
5. The turbomachine of any preceding clause, the plurality of heat pipes located circumferentially around the turbine casing.
6. The turbomachine of any preceding clause, each of the plurality of heat pipes located in a heat pipe heat exchanger, the heat pipe heat exchanger attached to the turbine casing.
7. The turbomachine of any preceding clause, wherein the one or more manifolds form part of a heat transfer loop, and the heat transfer medium in the heat transfer loop is at least one of:
   water, steam, glycol or oil.
8. The turbomachine of any preceding clause, wherein the plurality of heat pipes have a cross-sectional shape, the cross sectional shape generally comprising at least one of:
   circular, oval, rectangular with rounded corners or polygonal.
9. The turbomachine of any preceding clause, the plurality of heat pipes further comprising a plurality of fins, the plurality of fins configured to increase the heat transfer capability of the plurality of heat pipes.
10. The turbomachine of any preceding clause, the plurality of heat exchangers including a heat pipe heat exchanger operably connected to the plurality of heat pipes and the one or more manifolds, and the heat pipe heat exchanger also operably connected to:
   a fuel heating heat exchanger; or
   a heat recovery steam generator heat exchanger; or
   a fuel heating heat exchanger and a heat recovery steam generator heat exchanger.
11. A cooling system for a turbomachine, the turbomachine including a compressor, a combustor operably connected with the compressor, and a turbine operably connected with the combustor, the turbine having a turbine casing, the cooling system comprising:
   a cooling system operatively connected to the turbine casing, the cooling system including a plurality of heat pipes attached to and in thermal communication with the turbine casing, the plurality of heat pipes operatively connected to one or more manifolds, the plurality of heat pipes and the one or more manifolds are configured to transfer heat from the turbine casing to a plurality of heat exchangers.
12. The cooling system of any preceding clause, the plurality of heat pipes further comprising a heat transfer medium including one or combinations of:
   aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
13. The cooling system of any preceding clause, the plurality of heat pipes further comprising a molten salt heat transfer medium including one or combinations of, potassium or sodium.
14. The cooling system of any preceding clause, the plurality of heat pipes attached to the turbine casing via one or more of:
   welds, bolts, fasteners, welded brackets or clamps.
15. The cooling system of any preceding clause, the plurality of heat pipes located circumferentially around the turbine casing.
16. The cooling system of any preceding clause, each of the plurality of heat pipes located in a heat pipe heat exchanger, the heat pipe heat exchanger attached to the turbine casing.
17. The cooling system of any preceding clause, the plurality of heat exchangers including a heat pipe heat exchanger operably connected to the plurality of heat pipes and the one or more manifolds, and the heat pipe heat exchanger also operably connected to:
   a fuel heating heat exchanger; or
   a heat recovery steam generator heat exchanger; or
   a fuel heating heat exchanger and a heat recovery steam generator heat exchanger.
18. The cooling system of any preceding clause, wherein the plurality of heat pipes have a cross-sectional shape, the cross sectional shape generally comprising at least one of:
   circular, oval, or rectangular with rounded corners, polygonal.
19. A method of extracting heat from a turbine casing of a turbomachine, the method comprising:
   passing combustion gases through a turbine, the turbine casing forming an outer shell of the turbine;
   extracting heat from the turbine casing by thermally conducting the heat to a plurality of heat pipes, the plurality of heat pipes comprising a molten salt heat transfer medium including one or combinations of, potassium or sodium;
   conducting heat from the plurality of heat pipes to a heat pipe heat exchanger, the heat pipe heat exchanger configured to transfer heat to a fuel heating heat exchanger.
20. The method of any preceding clause, the heat pipe heat exchanger operably connected to a circuit including a heat recovery steam generator heat exchanger.

## Claims

1. A turbomachine (100) comprising:
a compressor (110) configured to compress air received at an intake portion to form a compressed airflow that exits into an outlet portion;
a combustor (120) operably connected with the compressor, the combustor receiving the compressed airflow;
a turbine (130) operably connected with the combustor, the turbine receiving combustion gas flow from the combustor, the turbine having a turbine casing;
a cooling system (250) operatively connected to the turbine casing, the cooling system including a plurality of heat pipes (252) attached to and in thermal communication with the turbine casing, the plurality of heat pipes operatively connected to one or more manifolds (254), the plurality of heat pipes and the one or more manifolds are configured to transfer heat from the turbine casing to a plurality of heat exchangers.

2. The turbomachine (100) of claim 1, the plurality of heat pipes further comprising a heat transfer medium including one or combinations of:
aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

3. The turbomachine (100) of any preceding claim, the plurality of heat pipes further comprising a molten salt heat transfer medium including one or combinations of, potassium or sodium.

4. The turbomachine (100) of any preceding claim, the plurality of heat pipes attached to the turbine casing via one or more of:
welds, bolts, fasteners, welded brackets or clamps.

5. The turbomachine (100) of any preceding claim, the plurality of heat pipes located circumferentially around the turbine casing.

6. The turbomachine (100) of any preceding claim, each of the plurality of heat pipes located in a heat pipe heat exchanger, the heat pipe heat exchanger attached to the turbine casing.

7. The turbomachine (100) of any preceding claim, wherein the one or more manifolds form part of a heat transfer loop, and the heat transfer medium in the heat transfer loop is at least one of:
water, steam, glycol or oil.

8. The turbomachine (100) of any preceding claim, wherein the plurality of heat pipes have a cross-sectional shape, the cross sectional shape generally comprising at least one of:
circular, oval, rectangular with rounded corners or polygonal.

9. The turbomachine (100) of any preceding claim, the plurality of heat pipes further comprising a plurality of fins, the plurality of fins configured to increase the heat transfer capability of the plurality of heat pipes.

10. The turbomachine (100) of any preceding claim, the plurality of heat exchangers including a heat pipe heat exchanger operably connected to the plurality of heat pipes and the one or more manifolds, and the heat pipe heat exchanger also operably connected to:
a fuel heating heat exchanger; or
a heat recovery steam generator heat exchanger; or
a fuel heating heat exchanger and a heat recovery steam generator heat exchanger.

11. A cooling system (250) for a turbomachine, the turbomachine including a compressor, a combustor operably connected with the compressor, and a turbine operably connected with the combustor, the turbine having a turbine casing, the cooling system comprising:
a cooling system operatively connected to the turbine casing, the cooling system including a plurality of heat pipes attached to and in thermal communication with the turbine casing, the plurality of heat pipes operatively connected to one or more manifolds, the plurality of heat pipes and the one or more manifolds are configured to transfer heat from the turbine casing to a plurality of heat exchangers.

12. The cooling system (250) of claim 11, the plurality of heat pipes further comprising a heat transfer medium including one or combinations of:
aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

13. The cooling system (250) of claim 11 or claim 12, the plurality of heat pipes further comprising a molten salt heat transfer medium including one or combinations of, potassium or sodium.

14. A method of extracting heat from a turbine casing of a turbomachine, the method comprising:
passing combustion gases through a turbine, the turbine casing forming an outer shell of the turbine;
extracting heat from the turbine casing by thermally conducting the heat to a plurality of heat pipes, the plurality of heat pipes comprising a molten salt heat transfer medium including one or combinations of, potassium or sodium;
conducting heat from the plurality of heat pipes to a heat pipe heat exchanger, the heat pipe heat exchanger configured to transfer heat to a fuel heating heat exchanger.

15. The method (1200) of claim 14, the heat pipe heat exchanger operably connected to a circuit including a heat recovery steam generator heat exchanger.
